# EUROPEAN PATENT SPECIFICATION

(11) **EP 3 012 771 B1**
(45) Date of publication and mention of the grant of the patent: **29.04.2020**
(21) Application number: 15180987.8
(22) Date of filing: 13.08.2015
(51) Int. Cl.: G06F 21/55, G06Q 20/06

(54) **SYSTEM AND METHOD FOR PROTECTING ELECTRONIC MONEY TRANSACTIONS**
SYSTEM UND VERFAHREN ZUM SCHUTZ ELEKTRONISCHER GELDTRANSAKTIONEN
SYSTÈME ET PROCÉDÉ DE PROTECTION DE TRANSACTIONS DE PAIEMENT ÉLECTRONIQUE

(30) Priority: 22.10.2014 RU 2014142363; 10.06.2015 US 201514735583
(43) Date of publication of application: 27.04.2016
(73) Proprietor: AO Kaspersky Lab, Moscow 125212 (RU)
(72) Inventor: KALININ, Alexander V., Moscow 125212 (RU); DOBROVOLSKY, Sergey V., Moscow 125212 (RU); SOLODOVNIKOV, Andrey Y., Moscow 125212 (RU); MARTYNENKO, Vladislav. V., Moscow 125212 (RU); SCHOUWENBERG, Roel, Moscow 125212 (RU)
(74) Representative: Chimini, Francesco

(56) References cited:
- EP-A1- 2 207 322
- WO-A1-2013/082190
- GB-A- 2 510 430

## Description

### Field of Technology

The present disclosure related generally to the field of computer security, and more specifically, to systems and methods for protecting electronic money transactions from fraud and malicious use.

### Background

At present, more and more attention is paid to so-called electronic money ("e-money"), which provides an electronic form of monetary liabilities of the issuer and is available to the user on electronic media (e.g., the Internet). Electronic money can be implemented using smart cards, networks or the like. Examples of e-money can be PayPal® or Yandex® money.

More recently, there has been another type of e-money that is called cryptocurrency. Cryptocurrency is a type of e-money that has its emissions and accounting based on cryptographic methods. Cryptocurrencies typically feature decentralized control among its users (as opposed to a centralized electronic money systems, such as PayPal®) and a public ledger which records transactions.

Almost all types of e-money have common features. The main feature includes the use of a so called electronic "wallet", which is a specialized program developed for storage and exchange of e-money via synchronization with other users or the issuer. Another distinctive attribute can be an electronic exchange where users can exchange their e-money for other types of electronic currency or real money (e.g., fiat money). With regard to cryptocurrency, the term "mining" refers to when a cryptocurrency is generated using a resource-intensive algorithm performing on modern CPUs or GPUs or even Application Specific Integrated Circuit ("ASIC") boards. In particular, within cryptocurrency systems, the safety, integrity and balance of the ledger are maintained by a community of mutually distrustful parties (i.e., "miners"), who are members of the general public using their computers to help validate and timestamp transactions adding them to the ledger in accordance with a particular timestamping scheme for the cryptocurrency systems.

With the increasing popularity of conducting transactions using e-money, various hackers and the like have started using social engineering methods to steal passwords from wallets or even distribute malicious programs, such as Trojans, to generate cryptocurrency from unsuspecting users. Electronic exchanges have also become the object of attention of scams that try to steal passwords to access both the electronic exchange and the user data stored therein.

Document EP 2 207 322 A1 discloses a system for protecting operations, comprising security modules configured per application, providing data security and traffic control, monitoring and controlling access to the network, filtering packets and adjusting the security modules.

Accordingly, there is a need for system and method that provides security for e-money transactions at various stages from the generation of e-money to its exchange.

### Summary

Disclosed are different aspect of systems, methods and computer program products for protecting transactions with electronic money from fraud and malicious use. The remaining of the present section provides non-limiting examples merely to help understanding the present invention. The invention is defined only by the scope of the appended claims.

According to one example, a method for controlling electronic money transactions. The exemplary method includes scanning a computer to detect software objects associated with electronic money that includes at least one of a wallet configured to store electronic money, an electronic money generating application, and data including an interaction history with an electronic exchange for electronic money; identifying and adjusting electronic money security modules configured to provide data security to the detected software objects associated with the electronic money; and executing, by the adjusted electronic money security modules, at least one electronic money transaction involving the electronic money, wherein the electronic money security modules include one of at least a wallet protection module, a malware detection module, and a traffic control module.

According to another example, the method includes tracking and protecting, by the wallet protection module, an execution of the wallet to store the electronic money and a transfer of the electronic money.

According to another example, the method includes detecting, by the wallet protection module, resources used by the wallet to store the electronic money and a transfer of the electronic money.

According to another example, the resources used by the wallet include wallet.dat file.

According to another example, the method includes controlling, by the wallet protection module, access to the resources used by the wallet to store the electronic money and a transfer of the electronic money.

According to another example, the method includes detecting, by the malware detection module, malicious programs that can intervene with electronic money transaction.

According to another example, the method includes scanning, by the traffic control module, all network traffic associated with the electronic money.

According to another example, the method includes scanning, by the traffic control module, network traffic associated with the electronic exchange for the electronic money.

According to another example, a system is disclosed for controlling electronic money transactions. According to one aspect, the system includes a hardware processor configured to scan a computer to detect software objects associated with electronic money that includes at least one of a wallet configured to store electronic money, an electronic money generating application, and data including an interaction history with an electronic exchange for electronic money; identify and adjusting electronic money security modules configured to provide data security to the detected software objects associated with the electronic money; and execute, by the adjusted electronic money security modules, at least one electronic money transaction involving the electronic money, wherein the electronic money security modules include one of at least a wallet protection module, a malware detection module, and a traffic control module.

### Brief Description of the Drawings

The accompanying drawings, which are incorporated into and constitute a part of this specification, illustrate one or more example aspects of the present disclosure and, together with the detailed description, serve to explain their principles and implementations.
Fig. 1 illustrates a diagram for an electronic money ("e-money") transaction.
Fig. 2 illustrates a possible threat for e-money transactions.
Fig. 3 illustrates a system for protecting an e-money transaction according to one aspect.
Fig. 4 illustrates an exemplary method for protecting a wallet transaction according to an exemplary aspect.
Fig. 5 illustrates a method for malicious programs detection an according to an exemplary aspect.
Fig. 6 illustrates a traffic control method according to an exemplary aspect.
Fig. 7 illustrates a flowchart of an example method of protecting electronic money transactions according to an exemplary aspect.
Fig. 8 illustrates an example of a general-purpose computer system (which may be a personal computer or a server) on which the disclosed systems and method can be implemented according to an example aspect.

### Detailed Description

Example aspects are described herein in the context of a system, method, and computer program product for providing security for electronic money transactions. Those of ordinary skill in the art will realize that the following description is illustrative only and is not intended to be in any way limiting. Other aspects will readily suggest themselves to those skilled in the art having the benefit of this disclosure. Reference will now be made in detail to implementations of the example aspects as illustrated in the accompanying drawings. The same reference indicators will be used to the extent possible throughout the drawings and the following description to refer to the same or like items.

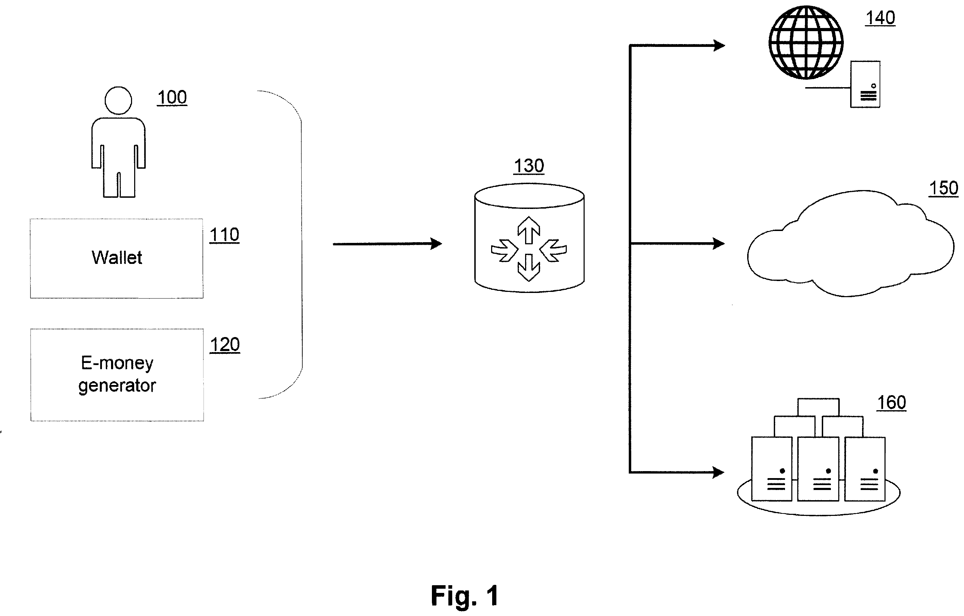

Fig. 1 illustrates a diagram for an electronic money ("e-money") transaction. As shown, user 100 can access an electronic exchange 140 where he can exchange his e-money for real currency or transfer it to his wallet 110. Wallet 110 has access to e-money network 150 via an application programming interface ("API"), for example, which verifies all transactions with e-money. Verification can be approved from the issuer (in case of PayPal®) or from other e-money users (distributed verification is one of the features of cryptocurrency). User 100 can also use an e-money generator 120 (e.g., "bitcoin mining") that has access to central (i.e., a pool) server 160 that coordinates work of such applications 120 among network 150. Typically, the generation (mining) of e-money includes generation of blocks by miners with their applications 120. After the necessary amount of blocks are generated, the number of miners (including user 100) will be awarded e-money with respect to how many blocks each of them has generated. All data is passed through the network infrastructure 130, which includes various types of network hardware and software including network cards and routers and the bulk network equipment as would be understood to one skilled in the art.

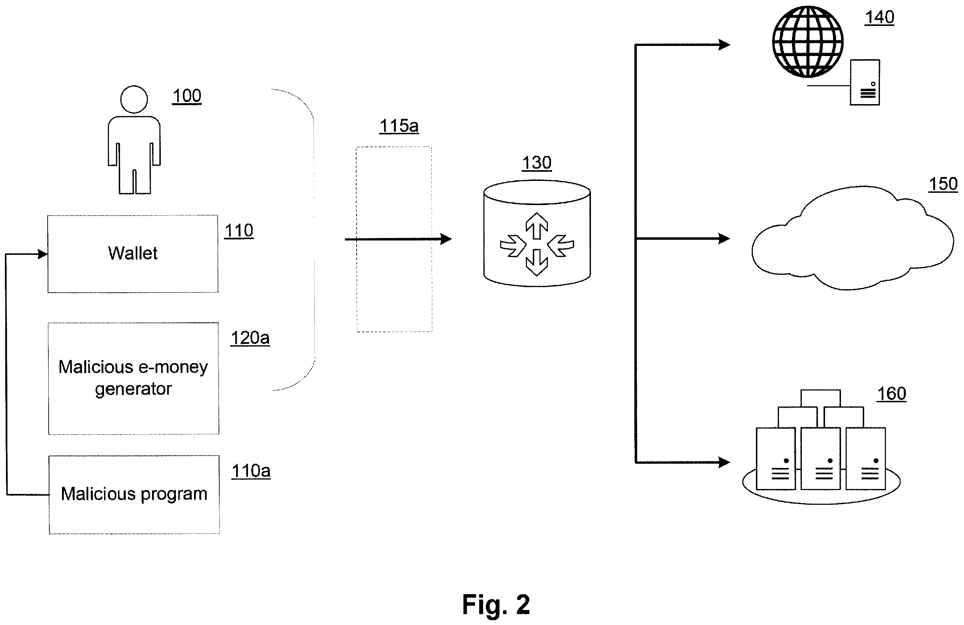

Fig. 2 illustrates a possible threat for e-money transactions. For example, a malicious program 110a can access wallet 110 and steal user credentials (for example, for file wallet.dat commonly used in cryptocurrencies). Malicious e-money generator 120a can use computer's resources (for example, a CPU or GPU) without user consent. Another malicous action includes using a proxy server 115a, which can be installed on the user's computer, for example, which tracks user 100 interaction with electronic exchange 140 in order to fraudulently obtain user credentials (e.g., login and password) or performs fraudulent e-money transactions from the wallet 110. The system and method disclosed herein provides protection of e-money transaction on various levels/stages.

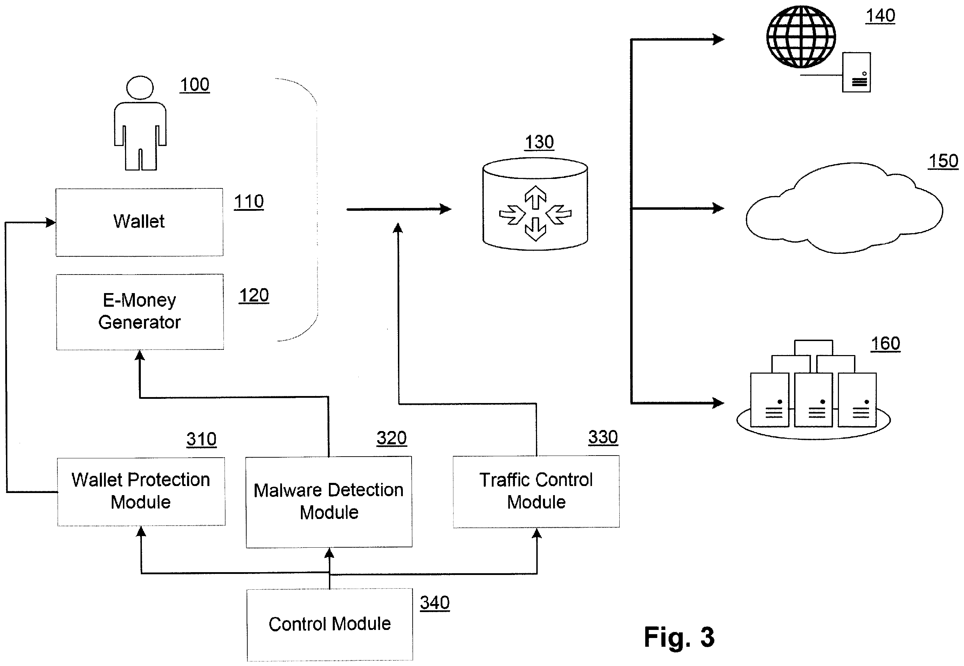

Fig. 3 illustrates a system for protecting an e-money transaction according to one example. As compared to Fig. 1, the system shown in Fig. 3 includes wallet protection module 310, malware detection module 320, traffic control module 330, and control module 340 (hereafter, collectively referred to as "electronic money security modules"). Wallet protection module 310 is designed to protect the process of an application of wallet 110 as well as other resources (e.g., files) used by the wallet 110. Malware detection module 320 performs antimalware functions, identifying the malicious application that is designed to generate e-money without user consent. Furthermore, malware detection module 320 can detect malicious applications that are attempting to access wallet 110 and its resources. Traffic control module 330 is designed to detect malicious actions/applications that conduct attacks such as "Man-in-the-middle" (MITM), for example, when trying to falsify user access to an electronic exchange 140. Control module 340 is configured to coordinate all modules 310-330, update the modules and their databases, add/remove functionality, automatically update settings and also search for objects that have any relationship to e-money: e-money generator 120, wallet 110, electronic exchange 140 history (for example, browser history if access was performed from browser).

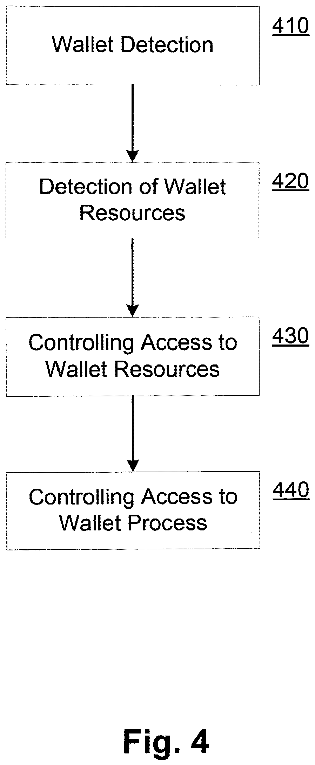

Fig. 4 illustrates an exemplary method for protecting a wallet transaction according to one example. As shown, in step 410, a computer is checked for a wallet 110 and its resources (for example, control module 340 can perform this task). In one example, the search may be based on finding executable files of wallet 110. In another example, the search may be based on using signatures or hashes for comparing checksums of files. Once the wallet 110 has been detected, various resources used by wallet 110 are searched in step 420. An example of such a resource can be file wallet.dat that stores information about cryptocurrency owned by the user. In step 430, wallet protection module 310 controls access to the resources detected in step 420. In one example, such control may be prohibition to open the file wallet.dat by any application other than wallet 110. Also the list of resources may contain the following: entries in the system registry, network storage media, cloud storage, portable storage devices (flash drives), smart phones, smart cards, and the like. Next, in step 440, wallet protection module 310 tracks and protects the execution of wallet application 110, controlling some examples such as: (i) access to virtual memory of wallet application 110 (for example, via the hooking system of the WriteProcessMemory function); (ii) network connections of wallet 110 in order to detect a possible use of a malicious proxy server 115a; (iii) clipboard; (iv) possible use of screenshots while running wallet application 110; (v) prohibiting control of the threads of wallet application 110; (vi) window messages; and (vii) setting hooks.

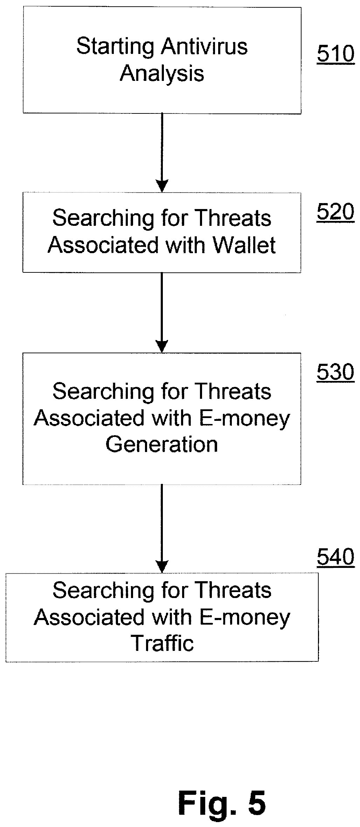

Fig. 5 illustrates an example method for malicious programs detection. As shown, detection of malicious programs that can intervene with e-money transaction may be performed via malware detection module 320 which can be part of antivirus application. In step 510, conditions for starting the antivirus check are reviewed, for example, control module 340 can perform this task. Such conditions can include one of the following: (i) detection of suspicious (untrusted) applications (in one example, those programs which are not included in whitelist, are considered as untrusted); (ii) clipboard access from untrusted applications; (iii) attempts to access wallet application 110; (iv) user starts antivirus check manually; and (v) on-demand antivirus scanning (as opposed to periodical antivirus scans).

In step 520, a search is executed for possible threats for wallet 110. Such threats can include keyloggers or those malicious applications that take screenshots. Detection is based on finding possible hooks for appropriate functions in the operating system. In step 530, a search is executed for possible threats that are related to the generation of e-money. An example of such a threat can be a Trojan, which uses computer resources to generate e-money without user consent. An example of heuristic signatures for detecting malicious applications to generate electronic money 120a may be the following set of attributes: how long an unknown application uses the resources of the GPU (i.e., the "Graphics Processing Unit") and periodically connects to pool server 160. In step 540, a search is performed for the risks posed with access to the network. Examples of such threats are malicious applications 115a, which can replace the web page of exchange 140 by a phishing resource when a user attempts to access it, as well as those malicious applications (proxy servers) 115a, which can monitor network connections of the wallet application 110 with a network 150 for fraudulent transactions of e-money.

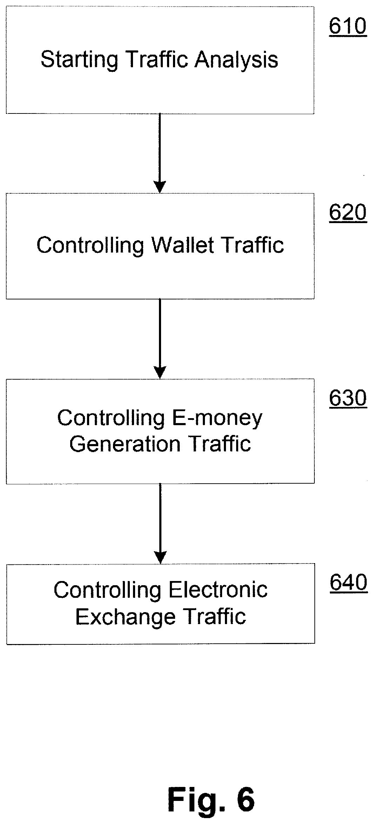

Fig. 6 illustrates an example traffic control method. As shown, traffic control module 330 is configured to check all network traffic associated with e-money transactions. As shown, in step 610, traffic control conditions are checked by control module 340, for example. Traffic control conditions can include, but are not limited to, presence of wallet 110, e-money generator 120, electronic exchange 140 history (for example, browser history if access was performed from browser). In step 620, traffic control module 330 controls traffic associated with wallet 110. In another example, this step can be carried out by wallet protection module 310, which controls network connections of wallet application 110 with network 150. In yet another example, wallet 110 transactions are monitored and untrusted recipients are checked. In step 630, e-money generation traffic is controlled. In order to achieve this goal all network interaction between pool server 160 and e-money generator 120 is monitored and all malicious packets are filtered out and the user is informed. In case of a detection of malicious generation of e-money, malware detection module 320 can be activated to search of possible Trojans on computer. In another example, a protocol analyzer may be used to disassemble such protocols as the Stratum mining protocol. In step 640, the traffic this is controlled is associated with exchange 140. In one example, the URL-address of exchange 140 is checked for its certificate and other parameters, as described, for example, in U.S. Patent No. 8,732,472, which is incorporated by reference in its entirety.

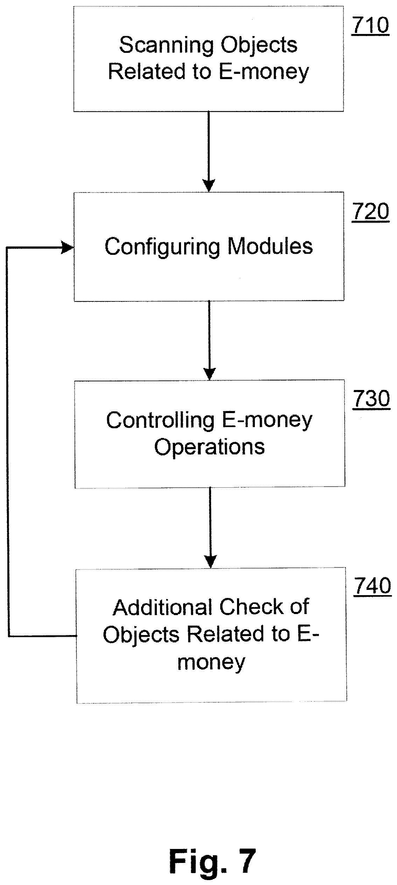

Fig. 7 illustrates a flowchart of an example method of protecting electronic money transactions. In step 710, control module 340 initializes wallet protection module 310, malware detection module 320, and traffic control module 330 for protection of possible e-money objects on a computer of a user 100. Such objects can include, but are not limited to, e-money generator 120, wallet 110, electronic exchange 140 histories (for example, browser history if access was performed from browser). Next, in step 720, modules 310-330 are adjusted in order to deliver the best protection for e-money objects. Adjustments can include, but not limited to: tuning wallet protection module 310 for specific wallet 110 and its resources, antivirus databases and settings for malware detection module 320, URL lists and protocol analyzer data for traffic control module 330. In step 730, all actions with e-money are controlled. More details are shown in Figs. 4-6 and described above. Finally, at step 740, a periodical rescan for e-money objects is performed for additional readjustment of modules 310-330. In one example, this step can be associated with updates for modules 310-330.

Protecting the wallet via periodic readjustments (or tuning) may include multiple options. First, it may include controlling the access to file wallet.dat (usually located in the folder %APPDATA%\Bitcoin - an example for crypto currency Bitcoin) from the side of the executable file of the wallet (for example, an executable file for the bitcoin-qt.exe crypto currency Bitcoin). Second, it may include controlling the operations of a running process of the executable file of the wallet, which may include protecting virtual memory (so that it was impossible to make an injection of external malicious code), ensuring secure user input (e.g., using a virtual keyboard) during display of the wallet's GUI, controlling network connections opened by the process. Third, it may include checking the executable file of the wallet for possible substitution by a Trojan using for example digital signatures, hash sums, emulation of the file in order to detect possible external malicious code. Fourth, it may also include updating antivirus database with the information about threats that apply to e-money and e-wallets, and configuring file and web scanners to search for these types of threats (for example, file scanner may be configured to search for specific Trojans, the heuristic analyzer may be configured to check unknown files on the functionality of these Trojans, etc.). Fifth, it may also include checking addresses of e-money exchanges for phishing (checking URL address) or for one of the common valid digital signature (type of attack Man-in-the-Browser) .

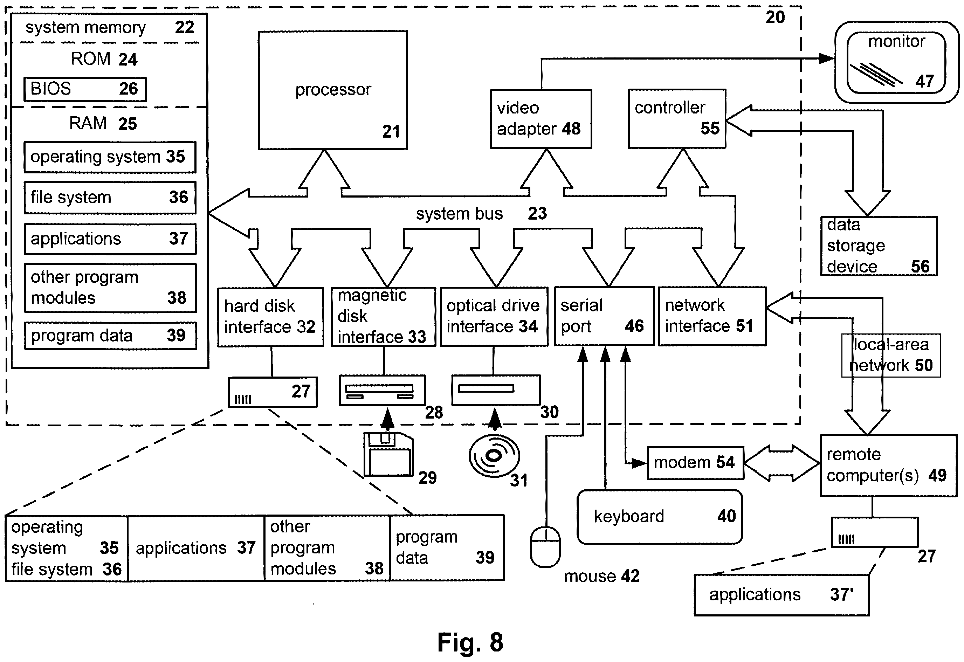

Fig. 8 illustrates an example of a general-purpose computer system (which may be a personal computer or a server) on which the disclosed example systems and method can be implemented. As shown, the computer system includes a central processing unit 21, a system memory 22 and a system bus 23 connecting the various system components, including the memory associated with the central processing unit 21. The system bus 23 is realized like any bus structure known from the prior art, containing in turn a bus memory or bus memory controller, a peripheral bus and a local bus, which is able to interact with any other bus architecture. The system memory includes permanent memory (ROM) 24 and random-access memory (RAM) 25. The basic input/output system (BIOS) 26 includes the basic procedures ensuring the transfer of information between elements of the personal computer 20, such as those at the time of loading the operating system with the use of the ROM 24.

The personal computer 20, in turn, includes a hard disk 27 for reading and writing of data, a magnetic disk drive 28 for reading and writing on removable magnetic disks 29 and an optical drive 30 for reading and writing on removable optical disks 31, such as CD-ROM, DVD-ROM and other optical information media. The hard disk 27, the magnetic disk drive 28, and the optical drive 30 are connected to the system bus 23 across the hard disk interface 32, the magnetic disk interface 33 and the optical drive interface 34, respectively. The drives and the corresponding computer information media are power-independent modules for storage of computer instructions, data structures, program modules and other data of the personal computer 20.

The present disclosure provides the implementation of a system that uses a hard disk 27, a removable magnetic disk 29 and a removable optical disk 31, but it should be understood that it is possible to employ other types of computer information media 56 which are able to store data in a form readable by a computer (solid state drives, flash memory cards, digital disks, random-access memory (RAM) and so on), which are connected to the system bus 23 via the controller 55.

The computer 20 has a file system 36, where the recorded operating system 35 is kept, and also additional program applications 37, other program modules 38 and program data 39. The user is able to enter commands and information into the personal computer 20 by using input devices (keyboard 40, mouse 42). Other input devices (not shown) can be used: microphone, joystick, game controller, scanner, and so on. Such input devices usually plug into the computer system 20 through a serial port 46, which in turn is connected to the system bus, but they can be connected in other ways, for example, with the aid of a parallel port, a game port or a universal serial bus (USB). A monitor 47 or other type of display device is also connected to the system bus 23 across an interface, such as a video adapter 48. In addition to the monitor 47, the personal computer can be equipped with other peripheral output devices (not shown), such as loudspeakers, a printer, and so on.

The personal computer 20 is able to operate in a network environment, using a network connection to one or more remote computers 49. The remote computer (or computers) 49 are also personal computers or servers having the majority or all of the aforementioned elements in describing the nature of a personal computer 20, as shown in Fig. 4. Other devices can also be present in the computer network, such as routers, network stations, peer devices or other network nodes.

Network connections can form a local-area computer network (LAN) 50 and a wide-area computer network (WAN). Such networks are used in corporate computer networks and internal company networks, and they generally have access to the Internet. In LAN or WAN networks, the personal computer 20 is connected to the local-area network 50 across a network adapter or network interface 51. When networks are used, the personal computer 20 can employ a modem 54 or other modules for providing communications with a wide-area computer network such as the Internet. The modem 54, which is an internal or external device, is connected to the system bus 23 by a serial port 46. It should be noted that the network connections are only examples and need not depict the exact configuration of the network, i.e., in reality there are other ways of establishing a connection of one computer to another by technical communication modules.

In various aspects, the systems and methods described herein may be implemented in hardware, software, firmware, or any combination thereof. If implemented in software, the methods may be stored as one or more instructions or code on a non-transitory computer-readable medium. Computer-readable medium includes data storage. By way of example, and not limitation, such computer-readable medium can comprise RAM, ROM, EEPROM, CD-ROM, Flash memory or other types of electric, magnetic, or optical storage medium, or any other medium that can be used to carry or store desired program code in the form of instructions or data structures and that can be accessed by a processor of a general purpose computer.

In various aspects, the systems and methods described in the present disclosure can be addressed in terms of modules. The term "module" as used herein refers to a real-world device, component, or arrangement of components implemented using hardware, such as by an application specific integrated circuit (ASIC) or field-programmable gate array (FPGA), for example, or as a combination of hardware and software, such as by a microprocessor system and a set of instructions to implement the module's functionality, which (while being executed) transform the microprocessor system into a special-purpose device. A module can also be implemented as a combination of the two, with certain functions facilitated by hardware alone, and other functions facilitated by a combination of hardware and software. In certain implementations, at least a portion, and in some cases, all, of a module can be executed on the processor of a general purpose computer (such as the one described in greater detail in Fig. 6 above). Accordingly, each module can be realized in a variety of suitable configurations, and should not be limited to any particular implementation exemplified herein.

In the interest of clarity, not all of the routine features of the aspects are disclosed herein. It would be appreciated that in the development of any actual implementation of the present disclosure, numerous implementation-specific decisions must be made in order to achieve the developer's specific goals, and these specific goals will vary for different implementations and different developers. It is understood that such a development effort might be complex and time-consuming, but would nevertheless be a routine undertaking of engineering for those of ordinary skill in the art, having the benefit of this disclosure.

Furthermore, it is to be understood that the phraseology or terminology used herein is for the purpose of description and not of restriction, such that the terminology or phraseology of the present specification is to be interpreted by the skilled in the art in light of the teachings and guidance presented herein, in combination with the knowledge of the skilled in the relevant art (s) . Moreover, it is not intended for any term in the specification or claims to be ascribed an uncommon or special meaning unless explicitly set forth as such.

## Claims

1. A method for controlling electronic money transactions, comprising:
checking a computer to detect an electronic wallet and resources used by the electronic wallet to store the electronic money and a transfer of the electronic money ;
providing a set of security modules comprising a wallet protection module configured to provide data security to the detected electronic wallet and resources and a traffic control module configured to analyze protocols and control the transmission of data relating to the exchange of the electronic money by the detected electronic wallet; and
upon detection of an electronic wallet:
controlling, by the wallet protection module, access to the resources used by the electronic wallet to protect an exchange of the electronic money by the electronic wallet;
tracking and protecting execution of the electronic wallet, by the wallet protection module, by monitoring and controlling access to at least one of virtual memory, network connections, and threads used by the electronic wallet, and wherein controlling access to the virtual memory comprises protecting virtual memory used by a running process of an executable file of the electronic wallet by prohibiting injection of an external malicious code;
controlling, by the traffic control module, network traffic associated with the electronic wallet to determine whether the exchange of electronic money by the electronic wallet is a transmission to an untrusted recipient based on protocol analyzer data obtained from analyzing the network connections; and
upon determination that the transmission is to an untrusted recipient, controlling, by the wallet protection module module, the exchange of electronic money between the electronic wallet and the untrusted recipient by at least one of filtering malicious packets or controlling network connections.

2. The method according to claim 1, further comprising providing a control module configured to coordinate and automatically update at least one of the setting or functions of the security modules.

3. The method according to any of claims 1 to 2, wherein the set of security modules further comprises a malware detection module configured to detect malware applications that are attempting to access the electronic wallet, wherein the detection is triggered by the control module, or input from a user of the computer.

4. The method according to any of claims 1 to 3, further comprising detecting, by the malware detection module, malicious programs that can intervene with an electronic money transaction.

5. The method according to any of claims 1 to 3, further comprising scanning, by the traffic control module, network traffic associated with the electronic money.

6. The method according to any of claims 1 to 3, further comprising scanning, by the traffic control module, network traffic associated with an electronic exchange for the electronic money.

7. A system for controlling electronic money transactions, comprising:
a hardware processor configured to:
check a computer to detect an electronic wallet configured to store the electronic money and a transfer of the electronic money;
provide a set of security modules comprising a wallet protection module configured to provide data security to the detected electronic wallet and resources and a traffic control module configured to analyze protocols and control the transmission of data relating to the exchange of the electronic money by the detected electronic wallet; and
upon detection of an electronic wallet:
control, by the wallet protection module, access to the resources used by the electronic wallet to protect an exchange of the electronic money by the electronic wallet;
track and protect execution of the electronic wallet, by the wallet protection module, by monitoring and controlling access to at least one of virtual memory, network connections, and threads used by the electronic wallet, and wherein controlling access to the virtual memory comprises protecting the virtual memory used by a running process of an executable file of the electronic wallet by prohibiting injection of an external malicious code;
controlling, by the traffic control module, network traffic associated with the electronic wallet to determine whether the exchange of electronic money by the electronic wallet is a transmission to an untrusted recipient based on protocol analyzer data obtained from analyzing the network connections; and
upon determining that the transmission is to an untrusted recipient, control, by the wallet protection module, the exchange of electronic money between the electronic wallet and the untrusted recipient by at least one of filtering malicious packets or controlling network connections.

8. The system according to claim 7, wherein the hardware processor is further configured to provide a control module configured to coordinate and automatically update at least one of the settings or functions of the security modules.

9. The system according to any of claims 7 to 8, wherein the hardware processor is further configured to provide a malware detection module as part of the set of security modules, configured to detect malware applications that are attempting to access the electronic wallet, wherein the detection is triggered by the control module, or input from a user of the computer.

10. The system according to any of claims 7 to 9, wherein the malware detection module is configured to detect malicious programs that can intervene with an electronic money transaction.

11. The system according to any of claims 7 to 9, wherein the traffic control module is configured to scan network traffic associated with the electronic money.

12. The system according to any of claims 7 to 9, wherein the traffic control module is configured to scan network traffic associated with the electronic exchange for the electronic money.

## Patentansprüche

1. Verfahren zum Regeln bzw. Steuern von elektronischen Geldtransaktionen, umfassend:
Überprüfen eines Computers, um eine elektronische Geldbörse und Ressourcen zu detektieren, die von der elektronischen Geldbörse verwendet werden, und zwar zum Speichern des elektronischen Geldes und ein Transfer des elektronischen Geldes;
Bereitstellen einer Reihe von Sicherheitsmodulen, umfassend ein Gelbörsenschutzmodul, ausgelegt, um der detektierten elektronischen Geldbörse und den Ressourcen Datensicherheit bereitzustellen, und ein Verkehrssteuer- bzw. - regelmodul, ausgelegt, um Protokolle zu analysieren und die Übermittlung von Daten zu steuern bzw. zu regeln, die den Austausch des elektronischen Geldes durch die detektierte elektronische Geldbörse betreffen; und
bei Detektion einer elektronischen Geldbörse:
Steuern bzw. Regeln durch das Geldbörsenschutzmodul des Zugangs zu den Ressourcen, die von der elektronischen Geldbörse verwendet werden, um einen Austausch von elektronischem Geld durch die elektronische Geldbörse zu schützen;
Nachverfolgen und Schützen des Ausführens der elektronischen Geldbörse durch das Geldbörsenschutzmodul durch Überwachen und Steuern bzw. Regeln eines Zugangs zu zumindest einem aus virtuellem Speicher, Netzwerkverbindungen und von der elektronischen Geldbörse verwendeten Threads bzw. Strängen, und wobei Steuern bzw. Regeln des Zugangs zu dem virtuellen Speicher das Schützen von virtuellem Speicher, der von einem laufenden Prozess einer ausführbaren Datei der elektronischen Geldbörse verwendet wird, durch Verbieten der Eingabe eines externen, schädlichen Codes, umfasst;
Steuern bzw. Regeln durch das Verkehrssteuermodul eines der elektronischen Geldbörse zugehörigen Netzwerkverkehrs, um festzustellen, ob der Austausch von elektronischem Geld durch die elektronische Geldbörse eine Übermittlung an einen nicht vertrauenswürdigen Empfänger ist, basierend auf Protokollanalysedaten, die durch Analysieren der Netzwerkverbindungen erlangt werden; und
bei dem Feststellen, dass die Übermittlung an einen nicht vertrauenswürdigen Empfänger ist, Steuern bzw. Regeln durch das Geldbörsenschutzmodul des Austauschs von elektronischem Geld zwischen der elektronischen Geldbörse und dem nicht vertrauenswürdigen Empfänger durch zumindest eines aus Filtern von schädlichen Paketen oder Steuern bzw. Regeln von Netzwerkverbindungen.

2. Verfahren nach Anspruch 1, ferner umfassend das Bereitstellen eines Steuer- bzw. Regelmoduls, das ausgelegt ist, zumindest eines aus der Einstellung oder Funktionen der Sicherheitsmodule zu koordinieren und automatisch zu aktualisieren.

3. Verfahren nach einem der Ansprüche 1 bis 2, wobei die Reihe von Sicherheitsmodulen ferner ein Malware-Erkennungsmodul umfasst, das ausgelegt ist, Malware-Anwendungen zu detektieren, die versuchen, auf die elektronische Geldbörse zuzugreifen, wobei das Detektieren von dem Steuer- bzw. Regelmodul oder durch Eingabe eines Benutzers des Computers ausgelöst wird.

4. Verfahren nach einem der Ansprüche 1 bis 3, ferner umfassend Detektieren durch das Malware-Erkennungsmodul von schädlichen Programmen, die in eine elektronische Geldtransaktion eingreifen können.

5. Verfahren nach einem der Ansprüche 1 bis 3, ferner umfassend Scannen bzw. Untersuchen durch das Verkehrssteuermodul des dem elektronischen Geld zugehörigen Netzwerkverkehrs.

6. Verfahren nach einem der Ansprüche 1 bis 3, ferner umfassend Scannen bzw. Untersuchen durch das Verkehrssteuermodul eines Netzwerkverkehrs der einem elektronischen Austausch für das elektronische Geld zugehörig ist.

7. System zum Steuern bzw. Regeln von elektronischen Geldtransaktionen, umfassend:
einen Hardwareprozessor, der ausgelegt ist:
Überprüfen eines Computers, um eine elektronische Geldbörse zu detektieren, die ausgelegt ist, das elektronische Geld zu speichern, und einen Transfer des elektronischen Geldes;
Bereitstellen einer Reihe von Sicherheitsmodulen, umfassend ein Gelbörsenschutzmodul, das ausgelegt ist, der detektierten elektronischen Geldbörse und den Ressourcen Datensicherheit bereitzustellen, und ein Verkehrssteuer- bzw. -regelmodul, das ausgelegt ist, Protokolle zu analysieren und die Übermittlung von Daten zu steuern bzw. zu regeln, die den Austausch des elektronischen Geldes durch die detektierte elektronische Geldbörse betreffen; und bei Detektion einer elektronischen Geldbörse:
Steuern bzw. Regeln durch das Geldbörsenschutzmodul des Zugangs zu den Ressourcen, die von der elektronischen Geldbörse verwendet werden, um einen Austausch von elektronischem Geld durch die elektronische Geldbörse zu schützen;
Nachverfolgen und Schützen des Ausführens der elektronischen Geldbörse durch das Geldbörsenschutzmodul, durch Überwachen und Steuern bzw. Regeln eines Zugangs zu zumindest einem aus virtuellem Speicher, Netzwerkverbindungen und von der elektronischen Geldbörse verwendeten Threads bzw. Stränge, und wobei Steuern bzw. Regeln des Zugangs zu dem virtuellen Speicher das Schützen des virtuellen Speichers, der von einem laufenden Prozess einer ausführbaren Datei der elektronischen Geldbörse verwendet wird, durch Verbieten der Eingabe eines externen, schädlichen Codes umfasst;
Steuern bzw. Regeln durch das Verkehrssteuermodul des der elektronischen Geldbörse zugeordneten Netzwerkverkehrs , um festzustellen, ob der Austausch von elektronischem Geld durch die elektronische Geldbörse eine Übermittlung an einen nicht vertrauenswürdigen Empfänger ist, basierend auf Protokollanalysedaten, die durch Analysieren der Netzwerkverbindungen erlangt werden; und
bei dem Feststellen, dass die Übermittlung an einen nicht vertrauenswürdigen Empfänger ist, Steuern bzw. Regeln durch das Geldbörsenschutzmodul des Austausches von elektronischem Geld zwischen der elektronischen Geldbörse und dem nicht vertrauenswürdigen Empfänger durch zumindest eines aus Filtern von schädlichen Paketen oder Steuern bzw. Regeln von Netzwerkverbindungen.

8. System nach Anspruch 7, wobei der Hardwareprozessor ferner ausgelegt ist, ein Steuer- bzw. Regelmodul bereitzustellen, das ausgelegt ist, zumindest eines aus den Einstellungen oder den Funktionen des Sicherheitsmoduls zu koordinieren und automatisch zu aktualisieren.

9. System nach einem der Ansprüche 7 bis 8, wobei der Hardwareprozessor ferner darauf ausgelegt ist, ein Malware-Erkennungsmodul als Teil der Reihe von Sicherheitsmodulen bereitzustellen, das ausgelegt ist, Malware-Anwendungen zu detektieren, die versuchen, auf die elektronische Geldbörse zuzugreifen, wobei das Erkennen von dem Steuer- bzw. Regelmodul oder durch Eingabe eines Benutzers des Computers ausgelöst wird.

10. System nach einem der Ansprüche 7 bis 9, wobei das Malware-Erkennungsmodul ausgelegt ist, schädliche Programme zu erkennen, die in eine elektronische Geldtransaktion eingreifen können.

11. System nach einem der Ansprüche 7 bis 9, wobei das Verkehrssteuermodul ausgelegt ist, dem elektronischen Geld zugehörigen Netzwerkverkehr zu scannen bzw. zu untersuchen.

12. System nach einem der Ansprüche 7 bis 9, wobei das Verkehrssteuer- bzw. regelmodul ausgelegt ist, Netzwerkverkehr zu scannen bzw. zu untersuchen, der dem elektronischen Austausch für das elektronische Geld zugehörig ist.

## Revendications

1. Procédé pour commander des transactions de paiement électronique, comprenant :
la vérification d'un ordinateur pour détecter un porte-monnaie électronique et des ressources utilisées par le porte-monnaie électronique pour stocker l'argent électronique et un transfert de l'argent électronique ;
la fourniture d'un ensemble de modules de sécurité comprenant un module de protection de porte-monnaie configuré pour fournir une sécurité de données au porte-monnaie électronique et aux ressources détectés et un module de commande de trafic configuré pour analyser des protocoles et commander la transmission de données en lien avec l'échange de l'argent électronique par le porte-monnaie électronique détecté ; et
lors de la détection d'un porte-monnaie électronique :
la commande, par le module de protection de porte-monnaie, d'un accès aux ressources utilisées par le porte-monnaie électronique pour protéger un échange de l'argent électronique par le porte-monnaie électronique ;
le suivi et la protection d'exécution du porte-monnaie électronique, par le module de protection de porte-monnaie, par la surveillance et la commande d'accès à au moins l'un d'une mémoire virtuelle, des connexions réseau, et de fils utilisés par le porte-monnaie électronique, et dans lequel la commande d'accès à la mémoire virtuelle comprend la protection de la mémoire virtuelle utilisée par un processus d'exécution d'un fichier exécutable du porte-monnaie électronique par la prohibition d'injection d'un code malveillant externe ;
la commande, par le module de commande de trafic, d'un trafic réseau associé au porte-monnaie électronique pour déterminer si l'échange d'argent électronique par le porte-monnaie électronique est une transmission vers un destinataire non fiable sur la base de données d'analyseur de protocole obtenues à partir de l'analyse des connexions réseau ; et
lors de la détermination du fait que la transmission est effectuée vers un destinataire non fiable, la commande, par le module de protection de porte-monnaie, de l'échange d'argent électronique entre le porte-monnaie électronique et le destinataire non fiable par au moins l'un d'un filtrage de paquets malveillants ou d'une commande de connexions réseau.

2. Procédé selon la revendication 1, comprenant en outre la fourniture d'un module de commande configuré pour coordonner et actualiser automatiquement au moins l'un du réglage ou de fonctions des modules de sécurité.

3. Procédé selon l'une quelconque des revendications 1 et 2, dans lequel l'ensemble de modules de sécurité comprend en outre un module de détection de logiciel malveillant configuré pour détecter des applications malveillantes qui tentent d'accéder au porte-monnaie électronique, dans lequel la détection est déclenchée par le module de commande, ou entrée par un utilisateur de l'ordinateur.

4. Procédé selon l'une quelconque des revendications 1 à 3, comprenant en outre la détection, par le module de détection de logiciel malveillant, de programmes malveillants qui peuvent interférer avec une transaction de paiement électronique.

5. Procédé selon l'une quelconque des revendications 1 à 3, comprenant en outre le balayage, par le module de commande de trafic, d'un trafic réseau associé à l'argent électronique.

6. Procédé selon l'une quelconque des revendications 1 à 3, comprenant en outre le balayage, par le module de commande de trafic, d'un trafic réseau associé à un échange électronique pour l'argent électronique.

7. Système pour commander des transactions de paiement électronique, comprenant :
un processeur logiciel configuré pour :
vérifier un ordinateur pour détecter un porte-monnaie électronique configuré pour stocker l'argent électronique et un transfert de l'argent électronique ;
fournir un ensemble de modules de sécurité comprenant un module de protection de porte-monnaie configuré pour fournir une sécurité de données au porte-monnaie électronique et aux ressources détectés et un module de commande de trafic configuré pour analyser des protocoles et commander la transmission de données en lien avec l'échange de l'argent électronique par le porte-monnaie électronique détecté ; et
lors de la détection d'un porte-monnaie électronique :
commander, par le module de protection de porte-monnaie, un accès aux ressources utilisées par le porte-monnaie électronique pour protéger un échange de l'argent électronique par le porte-monnaie électronique ;
suivre et protéger l'exécution du porte-monnaie électronique, par le module de protection de porte-monnaie, par la surveillance et la commande d'accès à au moins l'un d'une mémoire virtuelle, de connexions réseau, et de fils utilisés par le porte-monnaie électronique, et dans lequel la commande d'accès à la mémoire virtuelle comprend la protection de la mémoire virtuelle utilisée par un processus d'exécution d'un fichier exécutable du porte-monnaie électronique par la prohibition d'injection d'un code malveillant externe ;
commander, par le module de commande de trafic, un trafic réseau associé au porte-monnaie électronique pour déterminer si l'échange d'argent électronique par le porte-monnaie électronique est une transmission vers un destinataire non fiable sur la base de données d'analyseur de protocole obtenues à partir de l'analyse des connexions réseau ; et
lors de la détermination du fait que la transmission s'effectue vers un destinataire non fiable, commander, par le module de protection de porte-monnaie, l'échange d'argent électronique entre le porte-monnaie électronique et le destinataire non fiable par au moins l'un d'un filtrage de paquets malveillants ou d'une commande de connexions réseau.

8. Système selon la revendication 7, dans lequel le processeur logiciel est en outre configuré pour fournir un module de commande configuré pour coordonner et actualiser automatiquement au moins l'un des réglages ou fonctions des modules de sécurité.

9. Système selon l'une quelconque des revendications 7 et 8, dans lequel le processeur logiciel est en outre configuré pour fournir un module de détection de logiciel malveillant appartenant à l'ensemble de modules de sécurité, configuré pour détecter des applications malveillantes qui tentent d'accéder au porte-monnaie électronique, dans lequel la détection est déclenchée par le module de commande, ou entrée par un utilisateur de l'ordinateur.

10. Système selon l'une quelconque des revendications 7 à 9, dans lequel le module de détection de logiciel malveillant est configuré pour détecter des programmes malveillants qui peuvent interférer avec une transaction de paiement électronique.

11. Système selon l'une quelconque des revendications 7 à 9, dans lequel le module de commande de trafic est configuré pour balayer un trafic réseau associé à l'argent électronique.

12. Système selon l'une quelconque des revendications 7 à 9, dans lequel le module de commande de trafic est configuré pour balayer un trafic réseau associé à l'échange électronique pour l'argent électronique.
